Europäisches Patentamt

European Patent Office

Office européen des brevets

(11) Veröffentlichungsnummer: **0 434 036 A1**

## (12) EUROPÄISCHE PATENTANMELDUNG

(21) Anmeldenummer: 90124778.3

(22) Anmeldetag: 20.12.90

(51) Int. Cl.⁵: **A01F 25/20**

(30) Priorität: 21.12.89 DE 3942423

(43) Veröffentlichungstag der Anmeldung:
26.06.91 Patentblatt 91/26

(84) Benannte Vertragsstaaten:
AT BE CH DE DK ES FR GB GR IT LI LU NL SE

(71) Anmelder: **Fliegl, Josef**
**Maierhof 1**
**W-8261 Kastl(DE)**

(72) Erfinder: **Fliegl, Josef**
**Maierhof 1**
**W-8261 Kastl(DE)**

(74) Vertreter: **Seidel, Herta, Dipl.-Phys.**
**Siedlungsstrasse 3**
**W-8267 Lohkirchen Lkrs. Mühldorf/Inn(DE)**

(54) **Vorrichtung zum Entleeren eines Futtersilos.**

(57) Vorrichtung zum Entleeren eines Futtersilos mit einem, an einem Schwenkarm (9a) angelenkten Silokamm (16), bei der die Bahn der Silokammkante (17) durch Verbindung des Schwenkarmes (9a) mit einer geschlossenen Drehgelenkkette zwangläufig in einer bestimmbaren Ebene verläuft.

EP 0 434 036 A1

## VORRICHTUNG ZUM ENTLEEREN EINES FUTTERSILOS.

Die Erfindung betrifft eine Vorrichtung zum Entleeren eines Futtersilos mit einem Rahmen, an dem in einem ersten Drehgelenk ein Schwenkarm angelenkt ist, der an seinem anderen Ende über ein zweites Drehgelenk mit einem Silokamm verbunden ist.

Beim Arbeiten mit einem in der Praxis kurz Silokamm genannten Arbeitsgerät, das für die Entleerung eines Silos eingesetzt wird, ist es wünschenswert, die in einem Futterstock zusammengepreßte Silage möglichst gleichmäßig von oben nach unten abzustechen. In der Regel verlaufen die Silowände vertikal. Die Bedienungsperson hat dann die Aufgabe zu bewältigen, die Bewegung des mittels des hydraulisch betätigten Schwenkarmes auf einer kreisförmigen Bahn bewegten Silokammes durch Betätigen eines zweiten Steuergerätes so zu steuern, daß sich die Bewegung der Kammspitze einer geradlinigen Bahn annähert. Eine solche Handsteuerung setzt aber viel Erfahrung und Umsicht voraus. Ein völlig gerades Abstechen wird aber trotzdem kaum erreicht. Vielmehr kann nicht vermieden werden, daß sich durch die unerwünschte Kammführung der Futterstock auflockert, was zu einem nachteiligen Nachgären des im Silo verbliebenen Futters führt.

Die der Erfindung zugrunde liegende Aufgabe besteht nun darin, eine Vorrichtung zu schaffen, bei der durch die Bedienung nur eines einzigen Steuergerätes für die Durchführung der Bewegung des Schwenkarmes automatisch die gewünschte Kammbewegung erzielt wird.

Die Lösung des Problemes besteht darin, daß ein zweiter Schwenkarm, der in einem wählbaren Abstand von dem zweiten Drehgelenk des ersten Schwenkarmes über ein drittes Drehgelenk mit dem Silokamm verbunden ist und an seinem anderen Ende in einem Abstand von dem ersten Drehgelenk des ersten Schwenkarmes über ein viertes Drehgelenk am Rahmen angelenkt ist und eine ebene geschlossene Drehgelenkkette vervollständigt, die bei Ausführung einer Schwenkbewegung des ersten Schwenkarmes um sein erstes Drehgelenk zwangläufig eine Bewegung der Silokammkante in einer bestimmbaren Ebene veranlaßt.

Durch die beschriebene Konstruktion ist eine kinematische, geschlossene Kette gebildet, die die Eigenschaft hat, daß die Bewegung aller Getriebeglieder der Kette und ihrer Gelenkpunkte voneinander nicht mehr unabhängig erfolgen kann. Vielmehr ist nur die Bewegung eines Gliedes, hier des ersten Schwenkarmes, frei wählbar. Der Bewegungszustand der übrigen Glieder ist festgelegt. Es handelt sich somit um eine zwangläufige geschlossene Drehgelenkkette. Für die Bewegung des ersten Schwenkarmes ist zwischen dem Rahmen und dem ersten Schwenkarm ein Hydraulikkolbenaggregat angeordnet, dessen Bewegung über ein Steuergerät von der Bedienungsperson betätigbar ist. Die Bewegung des Silokammes und insbesondere die Bahn der Spitze des Silokammes erfolgt dann zwangläufig aus der Konstruktion, wobei die Maße, nämlich die Abmessungen der Schwenkarme, die Orte der Drehgelenke und ihre Abstände voneinander abhängig von der gewünschten Bahn der Kammspitze zu wählen sind.

Der Aufbau des erfindungsgemäßen Gerätes sowie die geometrischen Überlegungen, die für seine Konstruktion erforderlich sind, werden in der nachstehenden Beschreibung anhand der Zeichnung erläutert.

Hierin zeigen:

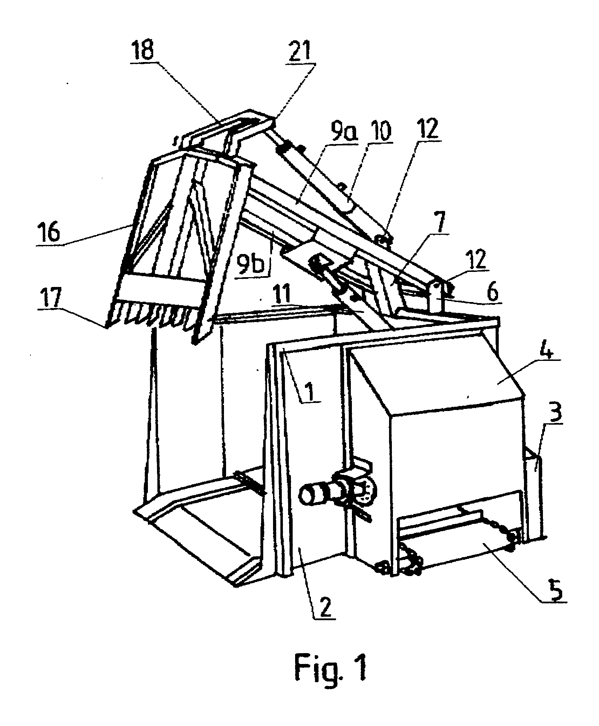

Fig. 1     eine Vorrichtung zum Entleeren eines Silos in perspektivischer Darstellung,

Fig. 2     eine Seitenansicht einer ersten Ausbildung der Drehgelenkkette mit Silokamm,

Fig. 3     eine Seitenansicht einer zweiten Ausbildung einer Drehgelenkkette mit Silokamm,

Fig. 4     eine Darstellung der der Drehgelenkkette nach Fig. 2 zugrundeliegenden Geometrie und

Fig. 5     eine Darstellung der der Drehgelenkkette nach Fig. 3 zugrundeliegenden Geometrie.

Eine Vorrichtung zum Entleeren von Futtersilos umfaßt einen in einem Rahmen 1 eingebauten, nach oben und nach einer Seite hin offenen Behälter 2. In einer Seitenwand des Behälters 2 ist eine Fördervorrichtung 3 eingebaut, deren Antriebsaggregat in einem Gehäuse 4 untergebracht ist. Das in dem Behälter 2 befindliche Futtergut wird mittels eines Förderbandes 5 aus dem Behälter 2 heraustransportiert und an den Einsatzort gebracht. An der Rückwand des Behälters 2 ragen Fortsätze 6 und 7 des Rahmens 1 nach oben und ein Vorsprung 8 seitlich aus dem Rahmen 1, die als Träger für Schwenkarme 9a,b, und 10 und ein Hydraulikkolbenaggregat 11 dienen. Die Schwenkarme 9a, 9b sind in Drehgelenken 12 an den Fortsätzen 6 des Rahmens 1 angelenkt. Der Schwenkarm 10 ist im Drehgelenk 13 am Fortsatz 7 des Rahmens 1 angeordnet.

Der Hydraulikkolben 11 ist einerseits am Vorsprung 8 des Rahmens 1 im Drehgelenk 14 angelenkt und andererseits mit den Schwenkarmen 9, 9a,b, über das beiden Schwenkarmen 9a,b, gemeinsame Drehgelenk 15 verbunden. Die Schwenkarme 9a,b und 10 tragen den eigentlichen Silokamm 16 mit einer spitz zulaufenden Vorderkante 17. Der Kopfteil des Silokammes 16 ist mit einem in Behälterrichtung hin abgeknickten Bügel 18 ausgestattet.

Die Schwenkarme 9a,b sind in den Drehgelenken 19 mit dem Silokamm 16 verbunden. Der Schwenkarm 10 ist im Drehgelenk 20, das am Bügel 18 des Silokammes 16 vorgesehen ist, mit dem Silokamm 16 verbunden. Am Schwenkarm 10 ist ferner noch eine längenveränderliche Kolbenstange 21 erkennbar, die zu einem Hydraulikkolbenaggregat gehört, mit der eine Schwenkbewegung des Silokammes 16 um die Drehgelenke 19 und 20 herbeigeführt werden kann, sobald die Kammspitze 17 bis auf den Siloboden vorgedrungen ist. Durch die Schwenkbewegung des Silokammes 16 wird das abgestochene Futtergut in den Behälter 2 hineingeschoben, damit dieses wiederum durch die Fördervorrichtung 2 weiter transportiert werden kann. Während der Tätigkeit der Getriebekette, gebildet aus den Schwenkarmen 9,a,b,10, Silokamm 16,18 und den Fortsätzen 6,7 bzw. der Gelenkkette, gebildet aus den vier Drehgelenken 13,20,19,12 wird der Hydraulikkolben 21 nicht ausgefahren, das heißt, der Schwenkarm 10 behält seine konstante Länge.

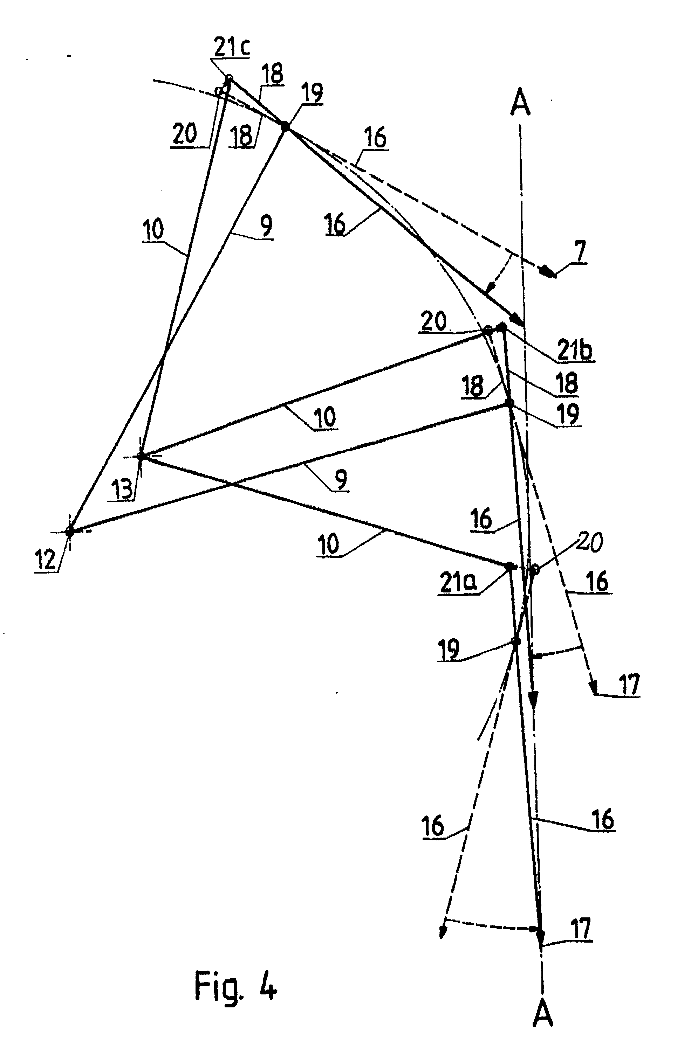

Die Länge des Schwenkarmes 10 sowie die Lager seines Drehgelenkes 13 am Fortsatz 7 läßt sich ensprechend der Geometrie, dargestellt in Fig. 4, ermitteln.

Hier sind in schematischer Vereinfachung in drei verschiedenen Winkellagen die Schwenkarme 9 und 10, ihre Drehgelenke 12, bzw. 13 und der Silokamm 16,18 mit den Drehgelenken 19 und 20 dargestellt. Die jeweils gestrichelt eingezeichnete Lage des Silokammes würde eingenommen werden, wenn nur der Schwenkarm 9 um das Drehgelenk 12 geschwenkt würde. Die Kammspitze 17 würde sich also auf einer Kreisbahn mit dem Radius, der der Länge des Schwenkarmes 9 entspricht, um das Drehgelenk 12 bewegen. Um die Kammspitze 17 auf die für die Bewegungsbahn der Kammspitze 17 vorgesehene durch die strichpunktierte Linie A .....A angedeutete geradlinige Bahn zu bringen, muß eine Schwenkbewegung des Silokammes 16,18 um sein Drehgelenk 19 erfolgen. Diese Bewegung wird durch die Fesselung des Silokammes 16,18 durch den Schwenkarm 10 bedingt. Dies führt dazu, daß das Drehgelenk 20 in jeder Stellung des 'Schwenkarmes 9 in seine gewünschte Position, in der Zeichnung mit 21 a,b,c bezeichnet, geschwenkt wird.

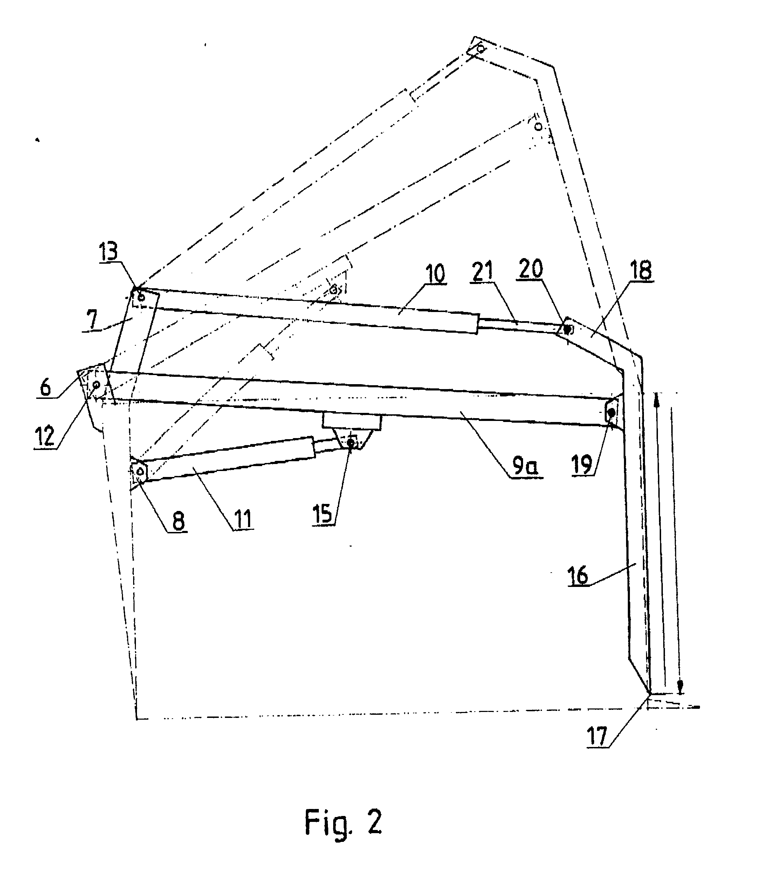

Die drei Positionen 21, a,b,c liegen auf einem Kreis, dessen Mittelpunkt geometrisch zu ermitteln ist. In diesem Punkt liegt das Drehgelenk 13. Der Radius des Kreises entspricht der Länge des Schwenkarmes 10. Sobald man die Länge des Schwenkarmes 10 und die Lage des Drehpunktes 13 geometrisch ermittelt hat, läßt sich die geschlossene Drehgelenkkette konstruktiv ausführen. Sie ist in der Lage, die jeweils gewünschte Bewegung der Silokammspitze 17 zu bewirken. In Fig. 2 sind gestrichelt 2 Stellungen der Schwenkarme 9,10 eingezeichnet. Man erkennt dann auch bei der gestrichelt eingezeichneten Stellung daß, die Kammspitze 17 genau auf der strichpunktiert eingezeichneten, die Bewegungsgerade kennzeichnenden Achse, liegt. Bei der Ausführung der Vorrichtung zum Entleeren eines Silos nach Fig. 2 liegt das Drehgelenk 13 des Schwenkarmes 10 oberhalb des Drehgelenkes 12, und zwar seitlich zu diesem versetzt.

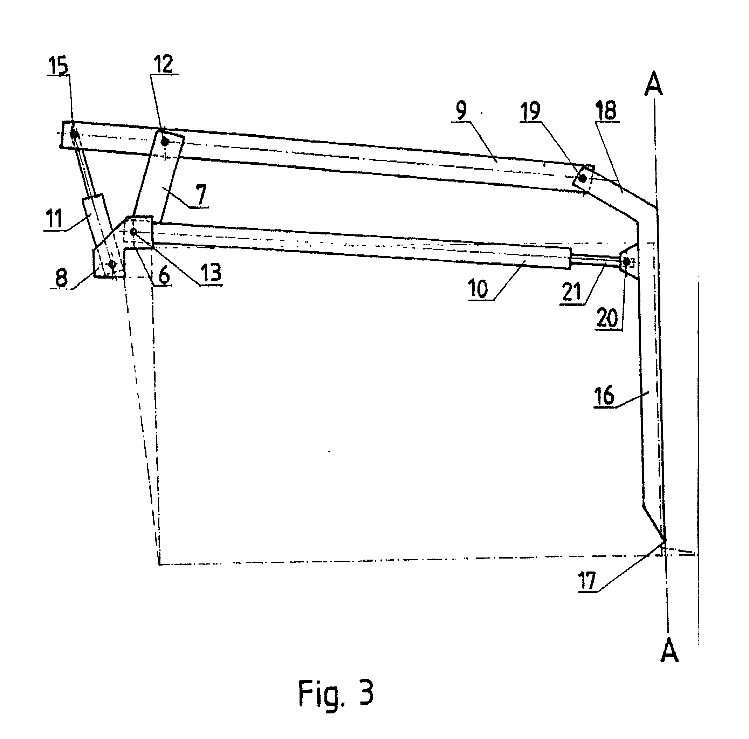

In der Ausbildung nach Fig. 3, in der sich entsprechende Teile mit übereinstimmenden Bezugsziffern gekennzeichnet sind, liegt der Schwenkarm 10 unter dem Schwenkarm 9. Im übrigen entsprechen sich die vorhandenen Bauelemente vollständig.

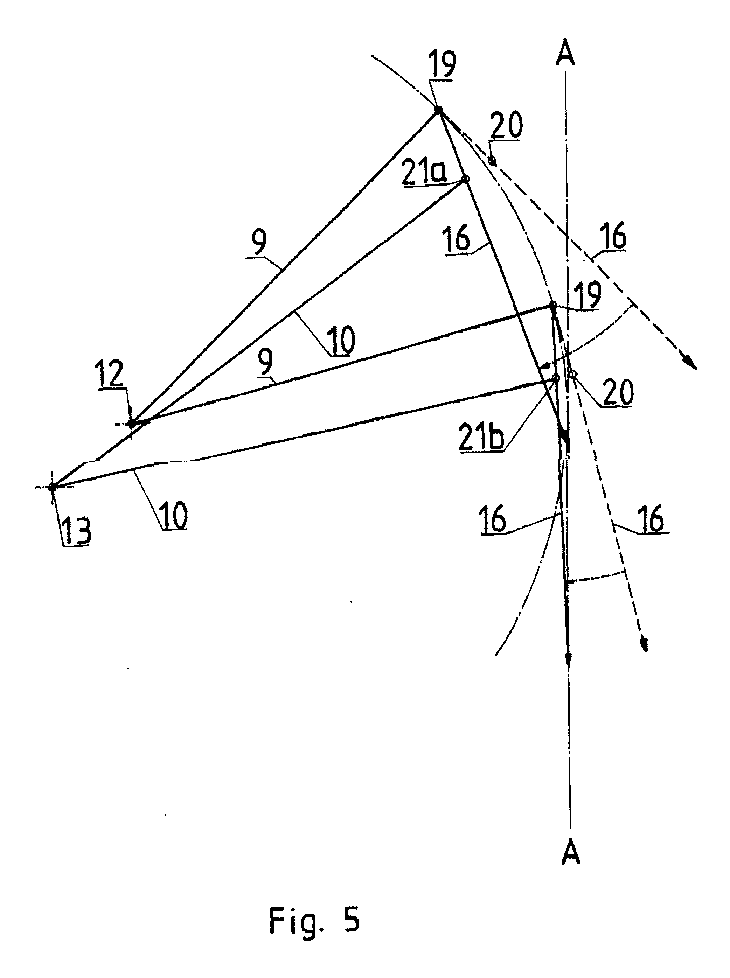

In der geometrischen Darstellung nach Fig. 5 ist der Silokamm 16 geradlinig ausgeführt. Im übrigen entspricht der konstruktive Gedankengang den Ausführungen, die zu Fig. 4 gemacht wurden. Nachdem man die Lage des Drehgelenkes 13 bestimmt hat und damit die Länge des Schwenkarmes 10 festgelegt ist, erfüllt sich die Forderung nach einer geradlinigen Bahn für die Kammspitze 17 automatisch.

Es ist selbstverständlich, daß die geradlinige Kammbahn nicht nur in vertikaler Richtung verlaufen muß. Vielmehr kann man bei entsprechender sinngemäßer Änderung der Konstruktion eine Bahn auch schräg zur Vertikalen erhalten. Letzteres ist von Bedeutung, wenn die Silowand schräg verläuft.

Es soll noch darauf hingewiesen werden, daß anstelle des in dem Text genannten Silokamms,der in der Beschreibung der Beispiele mit den Bezugszeichen 16,17,18 gekennzeichnet ist, auch eine Fräse als Teil der Drehgelenkkette eingebaut werden kann. An der Funktionsweise und Kinematik der Drehgelenkkette ändert sich dadurch nichts, da auch die Bahn der Fräse längs einer Geraden erfolgt, sofern die vorstehend genannten Bedingungen für das Gestänge eingehalten werden.

**Ansprüche**

1. Vorrichtung zum Entleeren eines Futtersilos mit einem Rahmen, an dem in einem ersten Drehgelenk ein Schwenkarm angelenkt ist, der an seinem anderen Ende über ein zweites Drehgelenk mit einem Silokamm verbunden ist, **gekennzeichnet durch** einen zweiten Schwenkarm (10), der in einem wählbaren Abstand von dem zweiten Drehgelenk (19) des ersten Schwenkarmes (9) über ein drittes Drehgelenk (20) mit dem Silokamm (16,18) verbunden ist und an seinem anderen Ende in einem Abstand von dem ersten Drehgelenk (12) des ersten Schwenkarmes (9) über ein viertes Drehgelenk (13) am Rahmen (1) angelenkt ist und eine ebene geschlossene Drehgelenkkette vervollständigt, die bei Ausführung einer Schwenkbewegung des ersten Schwenkarmes (9) um sein erstes Drehgelenk (12) zwangläufig eine Bewegung der Silokammkante (17) in einer bestimmbaren Ebene veranlaßt.

2. Vorrichtung nach Anspruch 1, **dadurch gekennzeichnet,** daß der erste Schwenkarm (9) mittels eines zwischen Rahmen (1) und erstem Schwenkarm (9) gelenkig angeordnetem Hydraulikkolbenaggregat (11) verschwenkbar ist.

3. Vorrichtung nach Anspruch 1 oder 2, **dadurch gekennzeichnet,** daß die Bewegungsbahn des Silokammes (16,18) vertikal oder in einem spitzen Winkel zur Vertikalen verläuft.

4. Vorrichtung nach einem der vorhergehenden Ansprüche, **dadurch gekennzeichnet,** daß das zweite Drehgelenk (19) des ersten Schwenkarmes (9) über dem dritten Drehgelenk (20) des zweiten Schwenkarmes (10) am Silokamm (16,18) angeordnet ist.

5. Vorrichtung nach einem der vorhergehenden Ansprüche, **dadurch gekennzeichnet,** daß das erste Drehgelenk (12) des ersten Schwenkarmes (9) über dem vierten Drehgelenk (13) des zweiten Schwenkarmes (10) seitlich zu diesem verschoben am Rahmen (1) angeordnet ist.

6. Vorrichtung nach einem der vorhergehenden Ansprüche, **dadurch gekennzeichnet,** daß das zweite Drehgelenk (19) des ersten Schwenkarmes (9) unter dem dritten Drehgelenk (20) des zweiten Schwenkarmes (10) am Silokamm (16,18) angeordnet ist.

7. Vorrichtung nach einem der vorhergehenden Ansprüche, **dadurch gekennzeichnet,** daß das erste Drehgelenk (12) des ersten Schwenkarmes (9) unter dem vierten Drehgelenk (13) des zweiten Schwenkarmes (10) seitlich zu diesem verschoben am Rahmen (1) angeordnet ist.

8. Vorrichtung nach einem der vorhergehenden Ansprüche, **dadurch gekennzeichnet,** daß die Lage des vierten Drehgelenkes (13) des zweiten Schwenkarmes (10) sich aus der Lage der zweiten und dritten Drehgelenke (19,20) am Silokamm (16,18) ergibt.

9. Vorrichtung nach einem der vorhergehenden Ansprüche, **dadurch gekennzeichnet,** daß der zweite Schwenkarm (10) längenveränderlich ausgebildet ist.

10. Vorrichtung nach einem der vorhergehenden Ansprüche, **dadurch gekennzeichnet,** daß für die Längenveränderung des zweiten Schwenkarmes (10) ein in die Stablänge des zweiten Schwenkarmes (10) eingesetzter Hydraulikkolben (21) vorgesehen ist, der nach Beendigung der zwangläufigen Bewegung des Silokammes (16,18) durch einen eigenen Antrieb (nicht dargestellt) betätigbar ist.

11. Vorrichtung nach einem der vorhergehenden Ansprüche, **dadurch gekennzeichnet,** daß am Rahmen (1) ein Futterbehälter (2) angeordnet ist, in den die bei der Kammbewegung abgestochene Silage durch eine durch die Längenveränderung des zweiten Schwenkarmes (10) bewirkte Schwenkbewegung des Silokammes (16,18) um das zweite und dritte Drehgelenk (19,20) eingeschoben wird.

12. Vorrichtung nach einem der vorhergehenden Ansprüche, **dadurch gekennzeichnet,** daß der Silokamm (16,18) an seinem mit dem zweiten Schwenkarm (10) gelenkig zu verbindenden Ende (18) abgeknickt ist.

13. Vorrichtung nach einem der vorhergehenden Ansprüche, **dadurch gekennzeichnet,** daß am Futterbehälter (2) eine Fördervorrichtung (3) angeordnet ist, mit der das in den Futterbehälter (2) eingebrachte Gut weiter transportiert werden kann.

Fig. 1

EP 0 434 036 A1

Fig. 2

Fig. 3

7

Fig. 4

Fig. 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-2 531 832 (VAN DER LELY)<br>* Seite 3, Zeile 9 - Seite 22, Zeile 8; Figuren 1-11 *<br>— — — | 1-3,6,7,<br>9-11,13 | A 01<br>F 25/20 |
| X | EP-A-0 015 823 (LUCAS)<br>* Seite 12, Zeile 29 - Seite 17, Zeile 5; Figuren 7, 8 *<br>— — — | 1-3,6-11,<br>13 | |
| X | FR-A-2 331 970 (STORTI)<br>* Seite 1, Zeile 35 - Seite 4, Zeile 16; Figuren 1-4 *<br>— — — — — | 1-3,6,7,<br>13 | |

|  |  | RECHERCHIERTE SACHGEBIETE (Int. Cl.5) |
|---|---|---|
|  |  | A 01 F |

Der vorliegende Recherchenbericht wurde für alle Patentansprüche erstellt

| Recherchenort | Abschlußdatum der Recherche | Prüfer |
|---|---|---|
| Den Haag | 27 März 91 | VERMANDER R.H. |